# EUROPÄISCHE PATENTANMELDUNG

(11) **EP 4 187 418 A1**
(43) Veröffentlichungstag der Anmeldung: **31.05.2023**
(21) Anmeldenummer: 21210951.6
(22) Anmeldetag: 29.11.2021
(51) Int. Cl.: G06F 21/57, G06F 21/53, G06F 9/455

(54) **VERFAHREN UND VORRICHTUNG ZUR AUTORISIERUNG EINER EINEN ZUGANG ANFRAGENDEN APPLIKATION**

(71) Anmelder: Siemens Aktiengesellschaft, 80333 München (DE)
(72) Erfinder: Knierim, Christian, 81373 München (DE); Schattleitner, Angela, 83104 Tuntenhausen (DE)
(74) Vertreter: Siemens Patent Attorneys

(57) **Zusammenfassung**

Die Erfindung beansprucht ein Verfahren zur Autorisierung einer einen Zugang anfragenden Applikation, die in einer ersten virtualisierten Software-Instanz (C1) betrieben wird, an einen Diensterbringersystem (DE), wobei mindestens eine weitere virtualisierte Software-Instanz (C2) auf einem gemeinsamen Hostsystem (D) betrieben wird,
gekennzeichnet durch folgende Verfahrensschritte:

a) Bereitstellen einer Laufzeitkonfigurationsdatenbank (TDB), in der zumindest ein von einer Überwachungsfunktion (RC) erfasster, aktueller Konfigurationszustand des Hostsystems abgelegt wird, wobei der Konfigurationszustand ein aktuellen Hostsystemstatus, Berechtigungen und/oder Laufzeitkonfiguration der ersten virtualisierten Software-Instanz sowie Berechtigungen und/oder Laufzeitkonfiguration der mindestens einen weiteren auf dem Hostsystem betriebenen virtualisierten Software-Instanz und/oder zumindest eine Kommunikationsbeziehungskonfiguration zwischen der ersten virtualisierten Software-Instanz und der mindestens einen weiteren virtualisierten Software-Instanz und/oder deren gegenseitigen Beeinflussung durch deren jeweiligen Berechtigungen und/oder Laufzeitkonfigurationen umfasst,
b) Abfragen des aktuellen Konfigurationszustand in der Laufzeitkonfigurationsdatenbank und Überprüfen des abgefragten Konfigurationszustandes der ersten virtualisierten Software-Instanz (C1) durch eine Ausführungsfunktion (PEP) anhand wenigstens eines konfigurierbaren Zugangskriterium auf dessen Erfüllung,
c) Autorisieren der anfragenden Applikation, wenn das wenigstens eine Zugangskriterium erfüllt ist, oder
d) Einleiten einer alarmierenden oder einer einen Zugang zum Diensterbringersystem entgegenwirkenden Maßnahme, wenn eines des wenigstens einen Zugangskriteriums nicht erfüllt ist.

## Beschreibung

Die Erfindung betrifft ein Verfahren und eine Anordnung zur Autorisierung einer einen Zugang anfragenden Applikation, die in einer ersten virtualisierten Software- Instanz betrieben wird, an einen Diensterbringersystem, wobei mindestens eine weitere virtualisierte Software-Instanz auf einem gemeinsamen Hostsystem betrieben wird, sowie zugehörige Vorrichtungen und ein zugehöriges Computerprogrammprodukt.

Da industrielle Systeme (Steuergeräte, Industrie PCs, IoT- und Edge-Geräte, Cloud-Server) oft über einen langen Zeitraum im Feld verwendet werden, sind sie sich ständig ändernden Voraussetzungen und einem dynamischen Umfeld ausgesetzt. Um mit diesen Umständen umzugehen, werden vor allem neue Geräte so entwickelt, dass sie über die Nutzungszeit flexibel angepasst werden können, z.B. durch die Unterstützung von nachladbaren Applikationen bzw. Anwendungen bzw. Apps. Geeignet dafür sind virtualisierte Software-Instanzen. Hierbei wird das Gastsystem z.B. die Software-Instanz vom Betriebssystem eines Hostsystem z.B. ein industrielles Edge-System isoliert. Das Hostsystem stellt eine virtuelle Laufzeitumgebung für die Software-Instanz zur Verfügung. Mit anderen Worten ausgedrückt, werden virtuelle (d.h. nicht physische) Geräte oder Dienste wie z.B. Betriebssystem(e), Datenspeicher und/oder Netzwerkressourcen bereitgestellt. Bekannt sind sogenannte Containervirtualisierungen. Dabei dürfen mehrere virtualisierte Software-Instanzen ("als Gäste"), isoliert voneinander den Kernel eines Hostsystems nutzen. Virtualisierte Software-Instanzen sind hier im Kontext vorzugsweise Container-Instanzen, können aber auch virtuelle Maschinen sein.

Container-Technologien, welche mit Hilfe von Container-Laufzeitumgebungen wie z. B. Docker, runC, Podman, CRI-O oder containerd erbracht werden, werden häufig im Zusammenhang mit dynamisch nachladbaren Applikationen in Linux-basierten bzw. Windows-basierten Systemen verwendet.

Container gewährleisten die Trennung und Verwaltung der auf einem Rechner genutzten Ressourcen. Ein Container-Image ist ein Abbild eines Containers. Das Image selbst kann aus mehreren aufeinander aufbauenden Schichten (Layern) bestehen, die geschützt (kryptographisch, speichergeschützt, etc.) werden können. Die Layer können dabei zusammen das Dateisystem einer Container-Instanz bilden. Ein Image ist normalerweise portabel, kann inRepositories (auch Container-Registry genannt) gespeichert und mit anderen Nutzern geteilt werden. Aus einem Image können mehrere Container-Instanzen bzw. virtualisierte Software-Instanzen gestartet werden, d.h. eine aktive "Instanz" eines Container-Images wird also gerade ausgeführt, d.h. eine bestimmte Applikation wird innerhalb einer Container-Instanz betrieben.

Unter Laufzeitumgebung kann beispielsweise ein Gerät oder eine Vorrichtung verstanden werden, die derart eingerichtet sind, einen Programmcode auszuführen. Hierzu kann das Gerät oder die Vorrichtung beispielsweise eine Prozessoreinheit (CPU) aufweisen, die den Programmcode ausführt. Die Laufzeitumgebung kann selbst in Software oder in Hardware realisiert sein. Die Laufzeitumgebung ermöglicht dabei die Ausführung von Programmcode. Eine Laufzeitumgebung kann durch mindestens einen umgebungsspezifischen Parameter beschrieben werden, z.B. der Maschinentyp / CPU-Typ, Version des Host-Betriebssystemkernels, Linux-Distribution, installierte Pakete, andere laufende Prozesse, etc.

Unter Programmcode kann im vorliegenden Zusammenhang eine Applikation (App) und/oder ein Programm und/oder Programmbefehle und/oder ein Container-Image verstanden werden. Linux Container, z.B. unter Verwendung von Container-Laufzeitumgebungen wie Docker oder runC, ermöglichen beispielsweise die Ausführung eines Container-Speicherabbilds (Container-Image) und der darin enthaltenen Applikation in einer isolierten Ausführungsumgebung, die auf eine Laufzeitumgebung der oben beschriebenen Art aufgesetzt werden kann. Container-Instanzen können beispielsweise verwendet werden, um flexibel unterschiedliche (App-)Funktionalitäten auf einem Steuergerät bzw. Feldgerät auszuführen. Eine Container-Instanz bzw. das Container-Image werden daher auch als Container-App bezeichnet.

Möchte man eine Container-Instanz starten bzw. in Betrieb nehmen, sollte überprüft werden, dass die für eine Container-Instanz gewünschten Ausführungsbeschränkungen, auch Restriktionen (z.B. Zugriffsberechtigungen, Speicherlimits, Lizenzschlüssel etc.) genannt, der Ausführungsumgebungen auch tatsächlich umgesetzt sind. Des Weiteren ist nicht sichergestellt, dass im IoT-Umfeld (IoT = Internet of Things) eine Container-Instanz auf dem dafür vorgesehenen Endgerät(-typ) läuft. Dies führt dazu, dass wenn eine Container-Instanz gestartet wird, das Risiko besteht, dass eine Container-Software der Ausführungsumgebung zu viele Rechte bzw. zu wenige Ausführungsbeschränkungen, auch Restriktionen (z.B. Zugriffs-/Zugangsberechtigungen, Speicherlimits, Lizenzschlüssel...) genannt, zuweist.

Bei Virtualisierungsmethoden wie Containern-Instanzen ist besonders kritisch, dass sich unterschiedliche, isoliert ausgeführte virtualisierte Software-Instanzen den gleichen Betriebssystem-Kernel teilen. Bei Betriebssystem-virtualierten Lösungen wie virtuelle Maschinen (VM) ist es möglich, dass mehrere virtualisierte Betriebssysteme gemeinsame Ressourcen (z.B. persistenter Speicher, Netzwerkressourcen etc.) verwenden und dies der anfragenden Applikation nicht bekannt ist.

Bei den meisten Plattformen kommunizieren die auf den Geräten betriebenen virtualisierten Software-Instanzen in den meisten Fällen mit sogenannten Backend-Services, welche außerhalb des Gerätes auf externen service- bzw. diensterbringenden Plattformen betrieben werden. Um mit Backend-Services kommunizieren zu können, ist es üblicherweise erforderlich, dass sich die virtualisierte Software-Instanz an dem Backend-service authentisiert. Es ist auch möglich, dass Daten von einem IoT-Gerät zur weiteren Analyse zu einer Cloud ausgeleitet werden. Dabei kann ein sogenanntes Zero-Trust-Verfahren (Null-Vertrauen z.B. in https://en.wikipedia.org/wiki/Zero_trust_security_model beschrieben) eingesetzt werden, über das zusätzlich die Granularität der Benutzer-Berechtigungen an Geräte-Kriterien gekoppelt ist.

In Abhängigkeit von festgelegten gerätespezifischen Kriterien (z.B. Gerätehardwareeigenschaften, ggf. detektierten Geräteschwachstellen, Netzbandbreitenutzung, Integrität und IP-Adresse der anfragenden Applikation, welche in einer solchen virtualisierten Software-Instanz betrieben wird, werden die Berechtigungen für die Zugriffsanfrage von einem sogenannten Policy Decision Point (PDP) bestimmt und der Anfrage über einen sogenannten Zero-Trust-Policy Enforcement Point (ZT-PEP) zugewiesen. Berechtigungen werden somit nicht ausschließlich an (Benutzer-)Authentisierungsinformationen (wie z.B. Identität/Benutzername) gekoppelt, sondern - wie oben beschrieben - an den Kontext der anfragenden Applikation gekoppelt.
Bei einer Hostvirtualisierung, die eine Betriebssystemvirtualiesierung ausgestaltet ist, und Container-basierten Umgebungen sollte die anfragende Applikation jedoch nicht isoliert zu betrachtet werden.

Dies geht daraus hervor, dass das Cybersecurity-Risiko für eine Virtualisierte Maschine (VM) bzw. einer Container-Instanz steigt, wenn andere, gleichzeitig in der Virtualisierungsumgebung laufende Virtuelle Maschinen bzw. Container-Instanzen dieselben Ressourcen (Netzwerk, Speicher, Betriebssystem-Kernel usw.) benutzen, wobei die parallel laufenden Virtuellen Maschinen bzw. oder Container-Instanzen auch in der Verantwortung von Fremdfirmen verwaltet werden können. Speziell in diesen Szenarien gibt es erhöhte Risiken der gegenseitigen Beeinflussung von virtuellen Maschinen oder eines Einbruchs in das Host- bzw. darunterliegende Virtualisierungssystem.

Beispielsweise besteht bei dem Anwendungsbeispiel der oben genannten industriellen Edge, welche beispielsweise in https://new.siemens.com/de/de/produkte/automatisierung/themen felder/industrial-edge.html beschrieben wird, die Möglichkeit, dass diverse Hersteller unterschiedliche Apps bereitstellen können, welche aus mehreren unterschiedlichen Containern bestehen und vom Betreiber des Gerätes analog zu Smartphone Apps auf dem Gerät installiert werden. Bei solchen Konstellationen ist die Gefahr sehr groß, dass durch das Erteilen von Zugriffsberechtigungen für eine App bzw. eine Container-Instanz einer App an ein Diensterbringersystem (z.B. einem Backendservice, eine Cloud) durch mangelnde Isolation auf dem Gerät Daten ausgeleitet werden. Dies ist z.B. möglich indem andere hoch privilegierte Container-Instanzen anderer Apps, auf die für den berechtigten Container bereitgestellten Daten des Diensterbringersystems zugreifen.

In einem sicherheitskritischen Umfeld besteht daher Bedarf an einer verbesserten Überwachung und Zugangskontrolle einer einen Zugang anfragenden Applikation, die in einer ersten virtualisierten Software-Instanz betrieben wird.

Der Erfindung liegt daher die Aufgabe zugrunde, ein Verfahren und eine Vorrichtung derart auszugestalten, dass eine gegenüber dem Stand der Technik sichere Autorisierung einer Applikation, welche in einer virtualisierten Software-Instanz betrieben wird, gewährleistet wird.

Diese Aufgabe wird durch die Merkmale gemäß den unabhängigen Patentansprüchen gelöst. Vorteilhafte Ausführungsformen der vorliegenden Erfindung sind in den abhängigen Ansprüchen beschrieben.

Die Erfindung beansprucht ein Verfahren zur Autorisierung einer einen Zugang anfragenden Applikation, die in einer ersten virtualisierten Software- Instanz betrieben wird, an einen Diensterbringersystem, wobei mindestens eine weitere virtualisierte Software-Instanz auf einem gemeinsamen Hostsystem betrieben wird,
gekennzeichnet durch folgende Verfahrensschritte:
a) Bereitstellen einer Laufzeitkonfigurationsdatenbank, in der zumindest ein von einer Überwachungsfunktion erfasster, aktueller Konfigurationszustand des Hostsystems abgelegt wird, wobei der Konfigurationszustand ein aktuellen Hostsystemstatus, Berechtigungen und/oder Laufzeitkonfiguration der ersten virtualisierten Software-Instanz sowie Berechtigungen und/oder Laufzeitkonfiguration der mindestens einen weiteren auf dem Hostsystem betriebenen virtualisierten Software-Instanz und/oder zumindest eine Kommunikationsbeziehungskonfiguration zwischen der ersten virtualisierten Software-Instanz und der mindestens einen weiteren virtualisierten Software-Instanz und/oder deren gegenseitigen Beeinflussung durch deren jeweiligen Berechtigungen und/oder Laufzeitkonfigurationen umfasst,
b) Abfragen des aktuellen Konfigurationszustand in der Laufzeitkonfigurationsdatenbank und Überprüfen des abgefragten Konfigurationszustandes der ersten virtualisierten Software-Instanz durch eine Ausführungsfunktion anhand wenigstens eines konfigurierbaren Zugangskriterium auf dessen Erfüllung,
c) Autorisieren der anfragenden Applikation, wenn das wenigstens eine Zugangskriterium erfüllt ist, oder
d) Einleiten einer alarmierenden oder einer einen Zugang zum Diensterbringersystem entgegenwirkenden Maßnahme, wenn eines des wenigstens einen Zugangskriteriums nicht erfüllt ist.

Das Verfahren ist vorzugsweise rechner-/computergestützt bzw. computerimplementiert ausgebildet bzw. wird vorzugsweise rechner-/computergestützt bzw. computerimplementiert ausgeführt.

Der Zugang kann unbeschränkt sein. Die Maßnahme kann umfassen, dass parallel laufende solche Software-Instanzen vorübergehend gestoppt werden bzw. ihnen der Zugriff auf gemeinsame Ressourcen wie z.B. Speicherressourcen, Netzwerkressourcen, Prozessressourcen etc. verweigert wird. Die Maßnahme kann eine Orchestrierung der ersten virtualisierten Software-Instanz und der wenigstens einen weiteren virtualisierten Software-Instanz in derart umfassen, dass die erste Software-Instanz und/oder die mindestens eine weitere Software-Instanz auf einem anderen Hostsystem installiert oder auf ein anderes Hostsystem verlagert werden. Eine bekannte Ochestrierungsumgebung ist beispielsweise Kubernetes https://kubernetes.io/).

Im vorliegenden Kontext wird unter Authentisierung das Nachweisen einer Identität (z.B. einer Person, eines Geräts etc.) bezeichnet. Die Authentisierung stellt einen ersten Schritt zur Prüfung der Identität eines Geräts, einer virtualisierten Software-Instanz etc. dar. Unter Autorisierung wird im vorliegenden Kontext die Einräumung von Privilegien bzw. das Gewähren des Zugangs zu den Privilegien (z.B. welche der erfolgreich nachgewiesenen Identität zustehen) verstanden. Privilegien sind hierbei Rechte bzw. Berechtigungen (wie z.B. Zugriff auf definierte Volumes, Netzwerkressourcen oder Geräte) auf dem darunterliegenden System (Laufzeitumgebung, Betriebssystem) oder (Prozess-)-berechtigungen innerhalb der virtualisierten Software-Instanz.

Speziell durch den Zugriff auf Netzwerkressourcen oder durch das Zuweisen von Prozessberechtigungen ist es möglich, dass unberechtigte Applikationskomponenten Daten einer anderen virtualisierten Instanz ausspähen.

Demnach ist nicht allein die Integrität einer anfragenden Applikation ausschließlich als Grundlage dafür hergenommen werden kann, welche Zugriffsberechtigungen der die Ausführungsfunktion erteilt. Vielmehr müssen neben der Integrität der Instanz auch Integritätsaspekte der darunterliegenden Virtualisierungsumgebung und die Co-Existenz weiterer virtueller Maschinen bzw. virtualisierte Software-/Container-Instanzen und deren Laufzeitkonfiguration bei der Authentisierung und folgenden Autorisierung eine Rolle spielen.

Die Laufzeitkonfigurationsdatenbank liefert somit eine Verbindung zwischen den Gast-Systemen und dem Hostsystem. Es ist demnach sinnvoll, dass eine eindeutige Identifikation für die virtualisierte Software-Instanz zugewiesen vom Hostsystem zugewiesen wird, welche in der Laufzeitkonfigurationsdatenbank hinterlegt wird. Damit können die in der Laufzeitkonfigurationsdatenbank zu jeder virtualisierten Software-Instanz gespeicherten Konfigurationsstatus bzw. -zustand des Hostsystems wie Hostsystemstatus, Berechtigungen und/oder Laufzeitinformationen eindeutig einer Software-Instanz zugeordnet werden.

Der aktuelle Konfigurationszustand des Hostsystems kann ereignisabhängig und/oder in festlegbaren zeitlichen Abständen erfasst werden. Ein Ereignis kann z.B. eine Installation von Betriebssystemkomponente, Start-/Stopp von virtuellen Software-Instanzen, Updates o.ä. sein. Wenn weitere virtualisiertes Software-Instanzen gestartet werden, dann kann der Status der anfragenden Applikation sich ändern und ggf. zu deren Beendigung führen.

Die in der Laufzeitkonfigurationsdatenbank gespeicherten Konfigurationszustände des Hostsystems zu jeder Software-Instanz können nach vorgebbaren Klassifikationskriterien (z.B. Safety-Anforderung bzw. Priorisierung der durch die Software-Instanz zu erledigenden Aufgaben) der virtualisierten Software-Instanzen sortiert und gegebenenfalls priorisiert sind. Die in der Laufzeitkonfigurationsdatenbank gespeicherten Konfigurationszustände z.B. durch Signatur, bei symmetrischen Verfahren HMAC oder durch Techniken wie JSON-Webtoken, X.509-Zertifkate integritätsgesichert werden.

Der Konfigurationszustand des Hostsystem umfasst in der Regel neben seinem eigenen Hoststatus auch die Laufzeitkonfiguration der einen oder mehreren virtualisierten Software-Instanzen, Berechtigungen z.B. Zugriff auf Betriebssystem-Namespace, Netzwerkressourcen bzw. andere Geräte/Hostsysteme bzw. Prozesse bei Prozess- und Speicherressourcenteilung und mögliche Schwachstellen der Software-Instanzen etc.
Eine auf dem Hostsystem betriebenen virtualisierten Software-Instanz kann dort installiert sein bzw. der Applikation, die in der virtualisierten Software-Instanz betrieben wird, kann bereits autorisiert sein, d.h. ihr kann bereits der Zugang zum Diensterbringersystem gewährt worden sein.

Eine Laufzeitkonfiguration ergibt sich z.B. durch eine Deployment-Änderung, z.B. Starten/Stoppen von Software-Instanzen, durch die eingesetzte Virtualisierungssoftware bzw. Laufzeitumgebung ggf. durch Update, externe Werkzeuge zur Kontrolle von Zugriffen durch andere virtualisierte und nicht virtualisierte Software-Instanzen.

Kommunikationsbeziehungskonfigurationen betreffen in der Regel den Datenaustausch z.B. mit Hilfe von geteilten Speicherressourcen bzw. Namensräume und/oder durch die virtualisierte Netzwerkkommunikation.

Eine gegenseitige Beeinflussung kann durch das Starten und Stoppen der einen virtualisierten Software-Instanz geschehen, das eine Wirkung auf das Starten/Stoppen der anderen virtualisierten Software-Instanz haben kann, z.B. Prozessprivilegien, Beeinflussung in einer Gefährdung der Datenintegrität bei gemeinsam genutzten Ressourcen (ggf. absichtlich durch Manipulation der Daten oder unabsichtlich bei Wettbewerb um die gemeinsamen Ressourcen innerhalb eines Netzwerkes).

Die Überwachungsfunktion kann als Reporting Client für die virtualisierten Software-Instanzen ausgestaltet sein; diese kann auf dem Gerät/Hostsystem integriert (z.B. Plugin/Agent), aber auch außerhalb des Hostsystem auf einem Remotesystem betrieben werden.

Das wenigstens eine Zugangskriterium kann von einer Entscheidungsstelle, die auf Basis einer von ihr durchgeführten Auswertung von verfügbaren Sicherheitsrichtlinien über die Anfrage der Applikation entscheidet, bereitgestellt werden.

Die Entscheidungsstelle kann beispielsweise als der eingangs erwähnte Policy Decision Point (PDP) ausgestaltet sein. Dieser ist Bestandteil eines richtlinienbasierten Zugriffskontrollsystems, das auf Grundlage der verfügbaren Informationen Attribute) und der geltenden Sicherheitsrichtlinien entscheidet, ob die Anfrage einer Applikation genehmigt werden soll oder nicht.

Analog zum obigen Verfahren ist ein weiterer Aspekt der Erfindung eine Vorrichtung mit Überwachungsfunktion, welche dazu eingerichtet ist, zumindest einen aktuellen Konfigurationszustand eines Hostsystems, auf dem mehrere virtualisierte Software-Instanzen betreibbar sind, zu erfassen und an eine Laufzeitkonfigurationsdatenbank zu übermitteln, wobei der Konfigurationszustand einen aktuellen Hostsystemstatus, Berechtigungen und/oder Laufzeitkonfiguration einer ersten virtualisierten Software-Instanz sowie Berechtigungen und/oder Laufzeitkonfiguration mindestens einer weiteren auf dem Hostsystem betriebenen virtualisierten Software-Instanz und/oder zumindest eine Kommunikationsbeziehungskonfiguration zwischen der ersten virtualisierten Software-Instanz und der mindestens einen weiteren virtualisierten Software-Instanz und/oder deren gegenseitigen Beeinflussung durch deren jeweiligen Berechtigungen und/oder Laufzeitkonfigurationen umfasst.

Ein weiterer Aspekt der Erfindung ist eine Vorrichtung mit Ausführungsfunktion, die dazu eingerichtet ist, einer einen Zugang zu einem Diensterbringersystem anfragenden Applikation, die in einer virtualisierten Software-Instanz betrieben wird, zumindest einen aktuellen Konfigurationszustand des Hostsystems in einer Laufzeitkonfigurationsdatenbank abzufragen und anhand wenigstens einem konfigurierbaren Zugangskriterium auf dessen Erfüllung zu überprüfen
sowie die anfragende Applikation zu autorisieren, wenn das wenigstens eine Zugangskriterium erfüllt ist, oder eine alarmierenden oder eine einen Zugang zum Diensterbringersystem entgegenwirkenden Maßnahme einzuleiten, wenn eines des wenigstens einen Zugangskriteriums nicht erfüllt ist.

Ein weiterer Aspekt der Erfindung ist eine Vorrichtung umfassend eine Laufzeitkonfigurationsdatenbank, welche dazu eingerichtet ist, zumindest ein von einer Überwachungsfunktion erfasste, aktuelle Konfigurationszustand eines Hostsystems, auf dem mehrere virtualisierte Software-Instanzen betreibbar sind, entgegenzunehmen und in der Laufzeitkonfigurationsdatenbank abzulegen und von einer Ausführungsfunktion abgefragte ein oder mehrere aktuelle Konfigurationszustände an die Ausführungsfunktion zu übermitteln, wobei der Konfigurationszustand eines aktuellen Hostsystemstatus, Berechtigungen und/oder Laufzeitkonfiguration einer ersten virtualisierten Software-Instanz sowie Berechtigungen und/oder Laufzeitkonfiguration mindestens einer weiteren auf dem Hostsystem betriebenen virtualisierten Software-Instanz und/oder zumindest eine Kommunikationsbeziehungskonfiguration zwischen der ersten virtualisierten Software-Instanz und der mindestens einen weiteren virtualisierten Software-Instanz und/oder deren gegenseitigen Beeinflussung durch deren jeweiligen Berechtigungen und/oder Laufzeitkonfigurationen umfasst.

Ein weiterer Aspekt der Erfindung ist eine Anordnung zur Autorisierung einer einen Zugang anfragenden Applikation, die in einer virtualisierten Software-Instanz betrieben wird, an ein Diensterbringersystem, wobei mehrere virtualisierte Software-Instanzen auf einem gemeinsamen Hostsystem betreibbar sind, aufweisend die vorgenannten Vorrichtungen.

Des Weiteren kann ein Computerprogrammprodukt eingesetzt werden, umfassend ein nichtflüchtiges Speichermedium, auf dem ein ladbarer und ausführbarer Programmcode gespeichert ist, welches das Verfahren nach einem der oben genannten Ausführungsformen in einer Prozessoreinheit insbesondere einer oder verteilt in mehreren Vorrichtungen nach einer der vorhergehend beschriebenen Ausführungsformen ausführt.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die Ausführungsumgebung erstellt werden kann.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die Ausführungsumgebung erstellt werden kann.

Das Verfahren, die Anordnungen, Vorrichtungen, Einheiten bzw. Geräte und Computerprogramm(-produkte), welches einen ladbaren und ausführbaren Programmkode oder verteilt ladbare und ausführbare Programmkodemodule umfassen kann, können entsprechend der Weiterbildungen/Ausführungsformen des vorgenannten Verfahrens und deren Weiterbildungen/Ausführungsformen und umgekehrt ausgebildet sein.

Eine Ausführungsform der Erfindung sieht vor, dass eine Einheit bzw. Komponente bzw. Vorrichtung integrierte oder koppelbare Funktion als eine Software-, Firmware- bzw. Hardware-Komponente ausgebildet sein kann. Eine Komponente kann einen Prozessor umfassen.

Bei einem Prozessor bzw. Prozessoreinheit kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit) oder um ein Multi-Chip-Modul handeln, insbesondere einen FPGA (engl. Field Programmable Gate Array) oder einen ASIC (anwendungsspezifische integrierte Schaltung, engl. Application-Specific Integrated Circuit), ein SoC (System on Chip) einen Grafikprozessor GPU (Graphics Processing Unit), einen Prozessor zur Auswertung eines neuronalen Netzes wie beispielsweise eine TPU (Tensor Processing Unit) oder einen DSP (Digitaler Signalprozessor, engl. Digital Signal Processor) handeln. Der Prozessor kann eine oder mehrere Rechenkerne (multi-core) aufweisen. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens oder anderer Aspekte und Teilaspekte der Erfindung implementiert. Der Prozessor kann einen Tamper-Schutz zum Schutz vor physikalischen Manipulationen aufweisen, z.B. Tamper-Sensoren zur Detektion physikalischer Angriffe.

### Ausführungsbeispiele der Erfindung

Ausführungsbeispiele des erfindungsgemäßen Verfahrens und der Übertragungsvorrichtung sind in den Zeichnungen beispielhaft dargestellt und werden anhand der nachfolgenden Beschreibung näher erläutert. Es zeigt:
Figur 1 eine beispielhafte Anordnung, bei der das erfindungsgemäße Verfahren angewandt werden kann und
Figur 2 ein Ablaufdiagramm des erfindungsgemäßen Verfahrens.

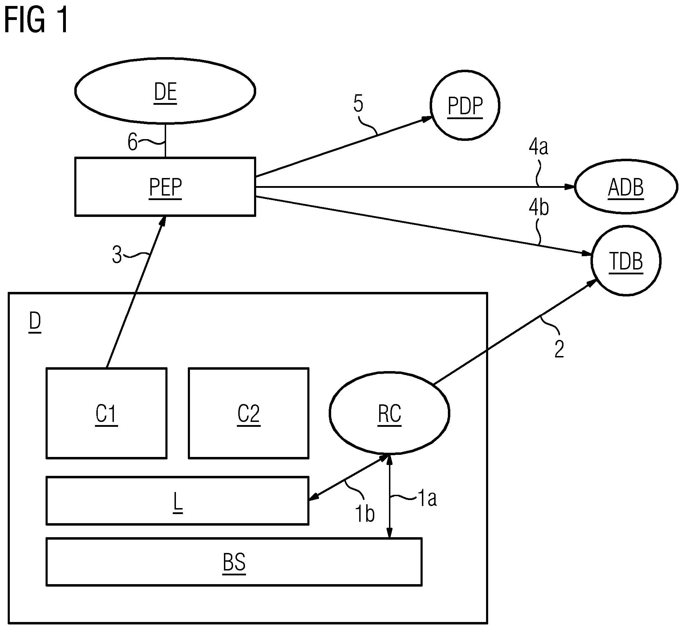

Die Figur 1 zeigt beispielhaft eine Anordnung, bei der ein erfolgreicher Aufbau einer Verbindung zu einem Diensterbringersystem DE nach einer Anfrage einer Applikation durchgeführt wird, die beispielsweise in einer virtualisierten Software-Instanz C1 betrieben wird.

Zur Erkennung des Vertrauensstatus der virtualisierten Software-Instanz C1 einer anfragenden Applikation bzw. App (siehe 3) soll auch der Gerätestatus weiterer Software-Instanzen z.B. C2, also den parallel auf der Virtualisierungsplattform eines Hostsystems D (beispielsweise ein Gerät) betriebenen virtualisierten Software-Instanzen, z.B. virtuellen Maschinen oder Container-Instanzen, und deren zugewiesene Privilegien berücksichtigt werden.

Privilegien sind hierbei Berechtigungen auf dem darunterliegenden System (wie z.B. Zugriff auf definierte Volumes, Netzwerkressourcen oder Devices) oder (Prozess-)-berechtigungen innerhalb der Instanz. Speziell durch den Zugriff auf Netzwerkressourcen oder durch das Zuweisen von Prozessberechtigungen ist es möglich, dass unberechtigte Applikationskomponenten Daten einer anderen virtualisierten Software-Instanz ausspähen oder zu manipulieren.

Mit Hilfe einer bereitgestellten Laufzeitkonfigurationsdatenbank TDB, die in eine Vorrichtung implementiert sein kann, soll zusätzlich auch der Gerätestatus und die Laufzeitkonfiguration der Komponenten (z.B. eingesetzte Version der Virtualisierungssoftware oder Container-Laufzeitumgebung L) berücksichtigt werden.

Neben dem Vertrauensstatus der anfragenden Applikation wird auch der Vertrauens- und Konfigurationsstatus des Hostsystems z.B. des Gerätes selbst beispielsweise mit Hilfe eines eine Überwachungsfunktion RC ausführenden Agenten bzw. Plugins in der Virtualisierungsumgebung und/oder über Remotezugriff auf eine externe Vorrichtung/Einrichtung, die die Überwachungsfunktion RC umfasst, Laufzeitkonfigurationsdaten erfasst. Hierzu werden Laufzeitkonfigurationen bei jeder Deployment-Änderung (Starten und Stoppen von Instanzen, Durchführen von Software-Updates) und Berechtigungen z.B. Zugriff auf Speicher/Namespace bzw. Netzwerkressourcen der virtualisierten Software-Instanzen in Schritt 1a erfasst und diese in die Laufzeitkonfigurationsdatenbank in Schritt 2 geschrieben. Diese Laufzeitkonfigurationsdatenbank beinhaltet somit die aktuelle Geräte- und Laufzeitkonfiguration, welche durch eine Ausführungsfunktion PEP, beispielsweise ausgebildet als Zero-Trust-Policy-Enforcement-Punkt, abgefragt werden.

Es werden in Schritt 1b auch Zugriffe des Hostsystems selbst sowie der virtualisierten Software-Instanzen auf Betriebssystemressourcen BS wie z.B. flüchtige Speicher und Prozesse etc. erfasst.

Durch die Erfassung und das Ablegen des gesamten Konfigurationsstatus, d.h. Hostsystemstatus, Berechtigung und der Laufzeitkonfiguration der gesamten Laufzeitumgebung L in der Laufzeitkonfigurationsdatenbank und der Bereitstellung dieser Daten gegenüber der Ausführungsfunktion kann dieser durch Abfrage an die Laufzeitkonfigurationsdatenbank entscheiden, ob eine anfragende Applikation auf ein von der Ausführungsfunktion geschützten Service im Diensterbringersystem DE (Backendsystem) zugreifen kann oder die aktuelle Geräte-Konfiguration oder andere auf dem Hostsystem befindlichen virtualisierte Software-Instanzen über Privilegien verfügen, die dafür sorgen, dass der Zugriff verhindert werden soll. Um eine Entscheidung treffen können, wird für eine Entscheidungsstelle PDP, die als ein Policy Definition Point ausgeprägt in eine Vorrichtung implementiert sein kann, ein entsprechendes Regelwerk (Policy) mit zumindest einem konfigurierbarem Zugangskriterium hinterlegt.

Soll eine Verbindung einer virtualisierten Software-Instanz zugelassen werden, d.h. die anfragende Applikation autorisiert werden, kontaktiert die Ausführungsfunktion in Schritt 4b zunächst die Laufzeitkonfigurationsdatenbank und fragt die aktuelle Konfigurationszustand des Hostsystems ab. Diese abgefragten Daten können auch lokal auf der Vorrichtung der Ausführungsfunktion für eine definierte Dauer zwischengespeichert werden. In einem weiteren Schritt 5 werden vom der Ausführungsfunktion die Zugangskriterien von der Entscheidungsstelle PDP abgefragt und auf die von der Laufzeitkonfigurationsdatenbank bereitgestellten Daten angewandt. Mit der bereitgestellten Zugangskriterien kann die Ausführungsfunktion in Schritt 6 als Maßnahme entweder die Verbindung zulassen oder ablehnen und auch der anfragenden, auf dem Hostsystem betriebenen Software-Instanz die Gründe der Ablehnung mitteilen.

Im Beispiel wird angenommen, dass sowohl dem darunterliegenden Hostsystem, dem ggf. auf diesen betriebenen Agenten/Plugins und der Laufzeitkonfigurationsdatenbank vertraut wird. Die Laufzeitkonfigurationsdatenbank kann sowohl zyklisch (in zeitlichen Abständen) oder ereignisabhängig aktualisiert werden. Ereignisse können hierfür auf dem Gerät durchgeführte Operationen (z.B. Installation von Betriebssystem-Komponenten, Start und Stopp von virtualisierten Software-Instanzen o.ä.) sein. Zudem soll es möglich sein, dass das Diensterbringersystem von der Laufzeitkonfigurationsdatenbank z.B. nach Unterbrechung der Verbindung zum Hostsystem eine Aktualisierung anfordern kann.

Im Falle einer Unterbrechung zur Laufzeitkonfigurationsdatenbank soll es möglich sein, dass Ergebnisse der Überwachungsfunktion auf dem Hostsystem temporär zwischengespeichert werden und diese nachträglich übertragen werden. Der Konfigurationszustand des Hostsystems kann von dem Hostsystem zur Integritätssicherung signiert werden, solange dieses einen vertrauenswürdigen Status hat. Das darunterliegende Hostsystem kann z.B. als vertrauenswürdig angesehen werden, solange auf der Plattform keine virtualisierten Software-Instanzen mit besonderen Prozessprivilegien oder Zugriffe auf besondere Dateisysteme betrieben werden. Bei der Aufnahme eines neuen Hostsystems soll über eine Regel hinterlegt werden, bei welchen Ereignissen der Vertrauensstatus entzogen werden kann. An die Änderung des Vertrauensstatus können auch Aktionen wie das Löschen des für die Signatur des Konfigurationszustands erforderlichen Schlüssels umfassen. Ist der Vertrauensstatus entzogen, kann dieser z.B. durch Neuinstallation des Hostsystems durch einen ausgelagerten Gesundheitsprüfung (englisch Health-Check) neu initialisiert und als gegenüber der Laufzeitkonfigurationsdatenbank als vertrauenswürdig gekennzeichnet werden.

Die Laufzeitkonfigurationsdatenbank kann die gespeicherten Konfigurationszustände bzw. Informationen über die verschiedenen virtualisierten Software-Instanzen klassifizieren / in Klassen einteilen. Im einfachsten Fall können kritische Applikation, die auf einer virtualisierten Software-Instanz betrieben werden, z.B. aufgrund von IEC 62443 Safety Anforderungen, mit hohem Abschottungsbedarf - von nicht kritischen Applikationen unterschieden werden.

Verschiedene Eigenschaften von Applikationen, z.B. Kommunikation mit externen Netzwerkzonen, Herkunft von einer geprüften Quelle, Remote Zugriffsmöglichkeit (Fern-Zugriff) aus einem anderen Projekt oder einer Fremdfirma, das Zulassen einer eingehenden (inbound connectivity) oder nur einer ausgehenden Verbindungsmöglichkeit (outbound connectivity) können zu einer solchen Klassifikation genutzt werden.

Basierend darauf kann eine Regel definiert werden, welche nicht nur softwaremäßig, sondern auch fest verdrahtet ausgestaltet sein kann und die das Starten und Stoppen von virtualisierten Software-Instanzen in unterschiedlichen Klassen reguliert und Teil des Regelwerks in der Entscheidungsstelle PDP sein kann.

Beispielsweise kann hiermit in einer Regel implementiert werden, dass kritische und nicht kritische Applikationen nicht gleichzeitig kommunizieren dürfen. Dies wäre auch eine Möglichkeit den Anforderungen von IEC 62443 zur Trennung kritischer und nicht-kritischer Netzwerkzonen Rechnung zu tragen. Möchte eine kritische Applikation z.B. mit dem Produktionsnetz kommunizieren, dann kann dies bewirken, dass zuvor eine nichtkritische Applikation zum nächstmöglichen Zeitpunkt gestoppt wird, gemeinsam genutzte Ressourcen auf einen definierten Ausgangszustand gesetzt werden und danach erst die kritische Applikation kommunizieren darf. Danach würde die nicht-kritische Applikation wieder hochgefahren. Dies würde das Risiko unerwünschter Wechselwirkung zwischen den kritischen und nichtkritischen Applikationen weitgehend verhindern.

Damit die Ausführungsfunktion die anfragende Applikation eindeutig zuordnen kann, ist es erforderlich, dass die virtualisierte Software-Instanz innerhalb der Laufzeitkonfigurationsdatenbank eindeutig identifiziert werden kann.

Eine bevorzugte Registrierung an der Laufzeitkonfigurationsdatenbank erfolgt über gesicherte Anmeldeverfahren wie eine zertifikatsbasierte Geräte-Authentisierung z.B. mittels OAUTH oder JSON Webtoken. Erfolgt eine Passwort-basierte Authentisierung an der Ausführungsfunktion, wird angenommen, dass Benutzername und Passwort bei der Verwendung von virtualisierten Software-Instanzen nicht im Instanz-Image für jede Instanz identisch hinterlegt sind, sondern diese entweder für jede Instanz oder zumindest für alle Instanzen eines Typs auf einem Gerät eindeutig sind. Dies kann z.B. erreicht werden, indem jedes Hostsystem eigenständige Credentials (Berechtigungsnachweise) zugewiesen bekommt oder das Hostsystem vor dem Start der virtualisierten Software-Instanz eigenständig Zertifikate ausstellt, die von einem Geräte-Zertifikat abstammen und diese nur für die Laufzeit der Instanz gültig sind. Um sicherzustellen, dass die Zertifikatsschlüssel bzw. die hinterlegten Zugangsdaten nicht ausgelesen werden, wird der Vertrauensstatus des gesamten Hostsystems entzogen. Zusätzlich kann der Geräteschlüssel des Hostsystems bei einer zertifikatsbasierten Lösung auch in einem Hardware Security Module (HSM) gespeichert werden, sodass verhindert wird, dass der Geräteschlüssel ausgelesen werden kann. Alternativ ist es auch möglich, dass das darunterliegende Hostsystem für die Software-Instanz bei einem Authentisierungsdienst ein für die Laufzeit gültiges Token anfordert und dies an die virtualisierte Software-Instanz übergibt. Ebenfalls besteht die Möglichkeit, dass Zugriffsdaten von der jeweiligen virtualisierten Software-Instanz von einem Schlüsselverwaltungssystem (Key management system) ausgestellt werden. Hierbei wird angenommen, dass diese ebenfalls gerätespezifisch bereitgestellt werden und somit die Instanz dem Hostsystem zugeordnet werden kann.

Immer dann, wenn eine virtualisierte Software-Instanz gestartet oder gestoppt wird, werden zu der Software-Instanz und dessen eindeutigem Identifier auch Laufzeitkonfiguration in die Laufzeitkonfigurationsdatenbank geschrieben. Hierzu gehören Topologieinformationen wie zugewiesene Netzwerk-Bridges, lokal in die Software-Instanz eingebundenes Dateisysteme oder Prozessprivilegien für die Instanzen. Ebenfalls soll die Möglichkeit bestehen, dass Signaturinformationen der Images oder der Deployment-Informationen übertragen werden, sodass die Ausführungsfunktion beispielsweise fordern kann, dass ausschließlich signierte Instanzen, signierte Instanzen eines definierten Herstellers oder nicht modifizierte Deployments auf dem Hostsystem betrieben werden.

Bei Starten und bei jedem Communication Requests (Verbindungsanfrage) einer Applikation über das Netz werden die für die Zuweisung von Zugriffsrechten erforderlichen Konformitätskriterien durch die Ausführungsfunktion geprüft, indem dieser in Schritt 4a Anfragen an eine gegebenenfalls vorhandene Assetdatenbank ADB und in Schritt 4b Anfragen an die Laufzeitkonfigurationsdatenbank TDB für den gesamten Host stellt. Insbesondere wird neben der Integrität des darunterliegenden Hostsystems (z.B. Definition bestimmter Softwarestände, bestimmter Konfigurationen oder Versionen) auch überprüft, ob andere virtualisierte Software-Instanzen bestimmte Konformitätsbedingungen erfüllen. Konformitätsbedingungen können hierbei die oben beschriebenen Laufzeitparameter und Signatureigenschaften der Images und Deployment-Informationen oder die Existenz zusätzlicher Sicherungsmaßnahmen wie z.B. die Verwendung einer zusätzlichen Sandbox (Laufzeitumgebung mit abgeschottetem Bereich) oder einem zusätzlichen Tunnel für die Kommunikation sein. Abhängig von den erfüllten Kriterien werden die Berechtigungen vollständig erteilt oder nur in reduziertem oder anders modifiziertem Umfang zur Verfügung gestellt. Es kann als Maßnahme ebenfalls auch die Verbindungsabfrage mit den gewünschten Privilegien abgelehnt werden.

In einer erweiterten Ausführungsform kann bei der nichterteilten vollständigen Berechtigung seitens der Ausführungsfunktion der Überwachungsfunktion der Grund für die Ablehnung der gewünschten Berechtigungen mitgeteilt werden. Die durch die Applikation erzeugte virtualisierte Software-Instanz kann hierbei eine entsprechende Fehlermeldung mit Hilfe entsprechender Lognachrichten oder durch entsprechende Systemaufruf-Argumente an die Laufzeitumgebung bzw. an das darunterliegende Hostsystem übergeben. Ein in der Laufzeitumgebung hinterlegtes Plugin oder ein Agent wertet die Konformitätsanforderungen aus und kann - sofern dies in einer für das Hostsystem hinterlegte Richtline hinterlegt ist, dafür sorgen, dass die spezifischen Konformitätsanforderungen durch Maßnahmen behoben werden, indem die für die Konformitätsverletzung betreffenden virtualisierten Software-Instanzen gestoppt werden oder z.B. mit veränderten Privilegien oder innerhalb einer Sandbox oder anderen Namensraum erneut gestartet werden.

Sofern das Verfahren im orchestrierten (Kubernetes) Umfeld angewandt wird, ist es zudem möglich, dass der Orchestrierer die betroffene virtualisierte Software-Instanz, dessen Applikationsanfrage abgelehnt wurde oder die Instanzen, die die Konformitätsverletzung ausführen auf ein anderes Gerät verlagert. Um sicherzustellen, dass die Verbindung nicht erneut abgelehnt wird, stellt eine Orchestrierung hierbei sicher, dass die betroffenen virtualisierten Software-Instanzen nicht zusammen auf dem gleichen Hostsystem erneut betrieben werden. Werden während einer durch die Ausführungsfunktion autorisierten Verbindung einer virtualisierten Software-Instanz auf dem Gerät weitere virtualisierte Software-Instanzen gestartet, kann sich der Konformitätsstatus des Hostsystems ändern. Dieser kann von der Ausführungsfunktion entweder zyklisch durch Abfrage der Laufzeitkonfigurationsdatenbank überprüft werden. Alternativ kann die erneute Überprüfung ausgelöst werden, sobald die Ausführungsfunktion der Laufzeitkonfigurationsdatenbank gegenüber mitteilt, dass diese über Änderungsoperationen auf dem Hostsystem informiert werden möchte, wodurch eine ereignisabhängige Überprüfung durchgeführt werden kann. Oder die Überprüfung der weiteren virtualisierten Software-Instanzen findet bei jeder Anfrage statt, die von der Ausführungsfunktion geprüft wird.

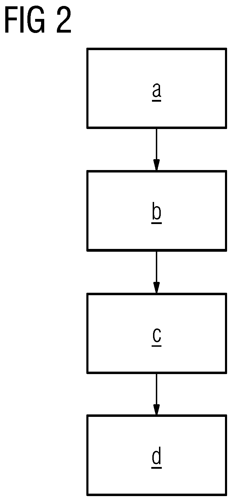

In Figur 2 werden die wesentlichen Schritte des erfindungsgemäßen Verfahrens in einem Ablaufdiagramm zusammengefasst.

In Schritt a wird eine Laufzeitkonfigurationsdatenbank z.B. TDB bereitgestellt bzw. zur Verfügung gestellt. Mit einer Überwachungsfunktion z.B. RC wird der aktuelle Konfigurationszustand eines Hostsystems z.B. D erfasst und in der Laufzeitkonfigurationsdatenbank abgelegt. Auf dem Hostsystem können gemeinsam mehrere virtualisierte Software-Instanzen z.B. C1, C2 betrieben werden. Der Konfigurationszustand umfasst ein aktuellen Hostsystemstatus, Berechtigungen und/oder Laufzeitkonfiguration einer ersten virtualisierten Software-Instanz sowie Berechtigungen und/oder Laufzeitkonfiguration mindestens einer weiteren auf dem Hostsystem betriebenen virtualisierten Software-Instanz und/oder zumindest eine Kommunikationsbeziehungskonfiguration zwischen der ersten virtualisierten Software-Instanz und der mindestens einen weiteren virtualisierten Software-Instanz und/oder deren gegenseitigen Beeinflussung durch deren jeweiligen Berechtigungen und/oder Laufzeitkonfigurationen.

In Schritt b wird der aktuelle Konfigurationszustand in der Laufzeitkonfigurationsdatenbank abgefragt, wenn eine Applikation einen Zugang zu einem Diensterbringersystem z.B. DE anfragt, wobei die Applikation in einer ersten virtualisierten Software-Instanz betriebenen wird. Dann wird der abgefragte Konfigurationszustandes der ersten virtualisierten Software-Instanz z.B. C1 durch eine Ausführungsfunktion z.B. PEP anhand wenigstens eines konfigurierbaren Zugangskriterium auf dessen Erfüllung überprüft.

In Schritt c wird die anfragende Applikation autorisiert, wenn das wenigstens eine Zugangskriterium erfüllt ist. Das Zugangskriterium kann als Teil eines Regelwerks beispielsweise in einer Entscheidungsstelle implementiert sein. Das Regelwerk kann Sicherheitsrichtlinien vorhalten, die ausgewertet werden, um über die Anfrage der Applikation zu entscheiden.

In Schritt d werden alarmierende oder ein oder mehrere Maßnahmen eingeleitet, wenn das wenigstens eine Zugangskriterium nicht erfüllt ist. Die Maßnahme wirkt einer Zulassung eines Zugangs zum Diensterbringersystem entgegen. Es kann auch der anfragenden Applikation die Gründe der Ablehnung des angefragten Zugangs mitgeteilt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Unter "rechner-/computergestützt" bzw. "computerimplementiert" kann im Zusammenhang mit der Erfindung beispielsweise eine Implementierung des Verfahrens verstanden werden, bei dem insbesondere ein Prozessor, der Teil der (Steuerungs- /Rechen-)-vorrichtung bzw. -einheit sein kann, mindestens einen Verfahrensschritt des Verfahrens ausführt. Das Verfahren kann hierbei auch in einer Rechnerwolke (Cloud) implementiert sein, die das Verfahren ausführen kann und damit Ergebnisse des Verfahrens an eine Steuerungs-/Rechen-)-vorrichtung bzw. -einheit liefern kann, die entsprechende Befehle bzw. Maßnahmen an die Vorrichtungen insbesondere der oben genannten Anordnung richten kann.

Sofern es in der nachfolgenden Beschreibung nicht anders angegeben ist, beziehen sich die Begriffe "abbilden", "nachbilden", "empfangen", "anwenden", "ausgeben", "bereitstellen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt oder vorliegen können.

Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren zur Autorisierung einer einen Zugang anfragenden Applikation, die in einer ersten virtualisierten Software-Instanz (C1) betrieben wird, an einen Diensterbringersystem (DE), wobei mindestens eine weitere virtualisierte Software-Instanz (C2) auf einem gemeinsamen Hostsystem (D) betrieben wird,
**gekennzeichnet durch** folgende Verfahrensschritte:
a) Bereitstellen einer Laufzeitkonfigurationsdatenbank (TDB), in der zumindest ein von einer Überwachungsfunktion (RC) erfasster, aktueller Konfigurationszustand des Hostsystems abgelegt wird, wobei der Konfigurationszustand ein aktuellen Hostsystemstatus, Berechtigungen und/oder Laufzeitkonfiguration der ersten virtualisierten Software-Instanz sowie Berechtigungen und/oder Laufzeitkonfiguration der mindestens einen weiteren auf dem Hostsystem betriebenen virtualisierten Software-Instanz und/oder zumindest eine Kommunikationsbeziehungskonfiguration zwischen der ersten virtualisierten Software-Instanz und der mindestens einen weiteren virtualisierten Software-Instanz und/oder deren gegenseitigen Beeinflussung durch deren jeweiligen Berechtigungen und/oder Laufzeitkonfigurationen umfasst,
b) Abfragen des aktuellen Konfigurationszustand in der Laufzeitkonfigurationsdatenbank und Überprüfen des abgefragten Konfigurationszustandes der ersten virtualisierten Software-Instanz (C1) durch eine Ausführungsfunktion (PEP) anhand wenigstens eines konfigurierbaren Zugangskriterium auf dessen Erfüllung,
c) Autorisieren der anfragenden Applikation, wenn das wenigstens eine Zugangskriterium erfüllt ist, oder
d) Einleiten einer alarmierenden oder einer einen Zugang zum Diensterbringersystem entgegenwirkenden Maßnahme, wenn eines des wenigstens einen Zugangskriteriums nicht erfüllt ist.

2. Verfahren nach dem vorhergehenden Anspruch, **dadurch gekennzeichnet, dass** die genannte Maßnahme eine Orchestrierung der ersten virtualisierten Software-Instanz (C1) und der wenigstens einen weiteren virtualisierten Software-Instanz in derart umfasst, dass die erste Software-Instanz und/oder die mindestens eine weitere Software-Instanz (C2) auf einem anderen Hostsystem installiert oder auf ein anderes Hostsystem verlagert werden.

3. Verfahren nach einem der vorhergehenden Ansprüche, **dadurch gekennzeichnet, dass** der aktuelle Konfigurationszustand des Hostsystems ereignisabhängig und/oder in festlegbaren zeitlichen Abständen erfasst wird.

4. Verfahren nach einem der vorhergehenden Ansprüche, **dadurch gekennzeichnet, dass** das wenigstens eine Zugangskriterium von einer Entscheidungsstelle (PDP), die auf Basis einer von ihr durchgeführten Auswertung von verfügbaren Sicherheitsrichtlinien über die Anfrage der Applikation entscheidet, bereitgestellt wird.

5. Verfahren nach einem der vorhergehenden Ansprüche, **dadurch gekennzeichnet, dass** einer virtualisierten Software-Instanz eindeutig ein in der Laufzeitkonfigurationsdatenbank zu jeder virtualisierten Software-Instanz gespeicherter Konfigurationszustand des Hostsystems zugeordnet werden kann.

6. Verfahren nach einem der vorhergehenden Ansprüche, **dadurch gekennzeichnet, dass** die in der Laufzeitkonfigurationsdatenbank gespeicherten Konfigurationszustände des Hostsystems zu jeder Software-Instanz nach vorgebbaren Klassifikationskriterien der virtualisierten Software-Instanzen sortiert und gegebenenfalls priorisiert sind.

7. Verfahren nach einem der vorhergehenden Ansprüche, **dadurch gekennzeichnet, dass** die in der Laufzeitkonfigurationsdatenbank gespeicherten Konfigurationszustände integritätsgesichert werden.

8. Vorrichtung mit Überwachungsfunktion (RC), welche dazu eingerichtet ist, zumindest einen aktuellen Konfigurationszustand eines Hostsystems (D), auf dem mehrere virtualisierte Software-Instanzen (C1, C2) betreibbar sind, zu erfassen und an eine Laufzeitkonfigurationsdatenbank zu übermitteln, wobei der Konfigurationszustand einen aktuellen Hostsystemstatus, Berechtigungen und/oder Laufzeitkonfiguration einer ersten virtualisierten Software-Instanz (C1) sowie Berechtigungen und/oder Laufzeitkonfiguration mindestens einer weiteren auf dem Hostsystem betriebenen virtualisierten Software-Instanz (C2) und/oder zumindest eine Kommunikationsbeziehungskonfiguration zwischen der ersten virtualisierten Software-Instanz und der mindestens einen weiteren virtualisierten Software-Instanz und/oder deren gegenseitigen Beeinflussung durch deren jeweiligen Berechtigungen und/oder Laufzeitkonfigurationen umfasst.

9. Vorrichtung mit Ausführungsfunktion (PEP), die dazu eingerichtet ist, einer einen Zugang zu einem Diensterbringersystem anfragenden Applikation, die in einer virtualisierten Software-Instanz betrieben wird, zumindest einen aktuellen Konfigurationszustand des Hostsystems in einer Laufzeitkonfigurationsdatenbank abzufragen und anhand wenigstens einem konfigurierbaren Zugangskriterium auf dessen Erfüllung zu überprüfen
sowie die anfragende Applikation zu autorisieren, wenn das wenigstens eine Zugangskriterium erfüllt ist, oder
eine alarmierenden oder eine einen Zugang zum Diensterbringersystem entgegenwirkenden Maßnahme einzuleiten, wenn eines des wenigstens einen Zugangskriteriums nicht erfüllt ist.

10. Vorrichtung umfassend eine Laufzeitkonfigurationsdatenbank (TDB), welche dazu eingerichtet ist, zumindest ein von einer Überwachungsfunktion erfasste, aktuelle Konfigurationszustand eines Hostsystems, auf dem mehrere virtualisierte Software-Instanzen betreibbar sind, entgegenzunehmen und in der Laufzeitkonfigurationsdatenbank abzulegen und von einer Ausführungsfunktion abgefragte ein oder mehrere aktuelle Konfigurationszustände an die Ausführungsfunktion zu übermitteln, wobei der Konfigurationszustand eine aktuellen Hostsystemstatus, Berechtigungen und/oder Laufzeitkonfiguration einer ersten virtualisierten Software-Instanz (C1) sowie Berechtigungen und/oder Laufzeitkonfiguration mindestens einer weiteren auf dem Hostsystem betriebenen virtualisierten Software-Instanz (C2) und/oder zumindest eine Kommunikationsbeziehungskonfiguration zwischen der ersten virtualisierten Software-Instanz und der mindestens einen weiteren virtualisierten Software-Instanz und/oder deren gegenseitigen Beeinflussung durch deren jeweiligen Berechtigungen und/oder Laufzeitkonfigurationen umfasst.

11. Anordnung zur Autorisierung einer einen Zugang anfragenden Applikation, die in einer virtualisierten Software-Instanz betrieben wird, an ein Diensterbringersystem, wobei mehrere virtualisierte Software-Instanzen auf einem gemeinsamen Hostsystem betreibbar sind, aufweisend die Vorrichtungen nach den vorhergehenden Vorrichtungsansprüchen.

12. Computerprogrammprodukt umfassend ein nichtflüchtiges Speichermedium, auf dem ein ladbarer und ausführbarer Programmkode oder verteilt ladbare und ausführbare Programmkodemodule gespeichert sind, welches oder welche das Verfahren nach einem der vorhergehenden Verfahrensansprüchen in einer Prozessoreinheit der Anordnung nach dem vorhergehenden Anspruch oder mehreren Prozessoreinheiten jeweils der Vorrichtungen nach den vorhergehenden Vorrichtungsansprüchen ausführt.
